# EUROPÄISCHE PATENTSCHRIFT

(11) **EP 2 651 780 B1**
(45) Veröffentlichungstag und Bekanntmachung des Hinweises auf die Patenterteilung: **09.09.2015**
(21) Anmeldenummer: 11802705.1
(22) Anmeldetag: 16.12.2011
(51) Int. Cl.: B65D 85/804

(54) **KAPSEL, SYSTEM UND VERFAHREN FÜR DIE ZUBEREITUNG EINES GETRÄNKS**
CAPSULE, SYSTEM, AND METHOD FOR PREPARING A BEVERAGE
CAPSULE, SYSTEME ET PROCEDE POUR LA PREPARATION D'UNE BOISSON

(30) Priorität: 17.12.2010 EP 10195723
(43) Veröffentlichungstag der Anmeldung: 23.10.2013
(73) Patentinhaber: Delica AG, 4127 Birsfelden (CH)
(72) Erfinder: AMREIN, Peter, 6204 Sempach (CH); MARSCHALL, Christina, 8050 Zürich (CH); POPESCU, Cristian Ionut, 4802 Strengelbach (CH)
(74) Vertreter: Hepp Wenger Ryffel AG
(86) Internationale Anmeldenummer: PCT/EP2011/073128
(87) Internationale Veröffentlichungsnummer: WO 2012/080501

(56) Entgegenhaltungen:
- WO-A2-2010/041179
- DE-A1- 2 752 733

## Beschreibung

Die vorliegende Erfindung betrifft eine Kapsel gemäss dem Oberbegriff von Anspruch 1 sowie ein Verfahren zur Getränkeherstellung.

Derartige Kapseln, die insbesondere lediglich einmal verwendet werden und nach Gebrauch zur Getränkeherstellung entsorgt werden, sind heute weit verbreitet als Portionsverpackungen für die Zubereitung von beispielsweise Kaffee oder Tee. Der Verbraucher muss sich also beispielsweise nicht mehr um die Dosierung der richtigen Kaffeemenge kümmern und nach dem Extraktionsvorgang kann die Kapsel samt Inhalt entsorgt werden.

Aus der DE 27 52 733 ist eine Patrone bekannt, welche eine Substanz für die Herstellung eines Getränks mit einer Maschine enthält. Diese Patrone weist einen im Wesentlichen dichten Korpus mit einer spitzwinkligen Kegelstumpfform auf, wobei diese Patrone üblicherweise aus Aluminiumblech hergestellt wird.

Dieser bekannte Stand der Technik weist jedoch den Nachteil auf, dass die Verwendung von Aluminium als Material für eine Kapsel bzw. einen Kapselkörper zum einen kostspielig ist. Zudem ist die Verwendung von Aluminium für insbesondere lediglich einmal zu verwendende Kapseln nachteilig für die Umwelt, da der Energieverbrauch für die Aluminiumherstellung hoch ist und grosse Mengen Aluminiumabfall nach Gebrauch der Kapseln anfallen.

Aus der EP 1 944 248 A1 ist eine Kunststoffkapsel bekannt, welche eine Substanz für die Herstellung eines Getränks mit einer Maschine enthält. In einem zentralen Bereich des Bodens der Kapsel ist eine Versteifungszone angeordnet, um zu verhindern, dass sich der Boden beim Aufbau der Reisspannung unmittelbar vor der Penetration unzulässig durchbiegt.

Dieser bekannte Stand der Technik weist jedoch den Nachteil auf, dass die Kapsel sich nicht zur Verwendung in häufig vorkommenden Maschinen zur Getränkeherstellung eignet, da deren Versteifung des Bodens häufig nicht ausreichend ist zur zuverlässigen Penetration des Bodens.

WO 2010/041179 A2 offenbart eine Kapsel welche im Bodenbereich des Kapselkörpers gezielt Verstärkungsrippen und eine Schwächungszone zur Penetration aufweist. Die räumlich begrenzte Dimensionierung der Schwächungszone bedingt jedoch ein spezifisch ausgestaltetes und ausgerichtetes Penetrationsmittel. Bei einer anderen Anordnung der Penetrationsmittel sind die Verstärkungsrippen nicht ausreichend, um einen zuverlässige Penetration zu gewährleisten.

Durch die EP 1 521 541 B1 ist eine Kapsel bekannt geworden, die um einen zentralen Durchlochungsbereich im Boden mehrere Vertiefungsaussparungen aufweist. Die Kapsel ist kegelstumpfförmig und mit einem radialen Kragen versehen. Dieser Kragen ist durch einen langgestreckten Rand verlängert, welcher der Positionierung der Kapsel dient.

Es ist daher eine Aufgabe der vorliegenden Erfindung, die Nachteile des Bekannten zu vermeiden, insbesondere also eine Kapsel bereitzustellen, die in der Herstellung sowie auch in der Entsorgung weniger umweltbelastend und kostengünstig herstellbar ist und die eine zuverlässige Penetration des Bodens mittels häufig vorkommender Maschinen zur Getränkeherstellung erlaubt. Diese Aufgabe wird durch eine Kapsel mit den Merkmalen im Anspruch 1 gelöst.

Die erfindungsgemässe Kapsel besteht aus einem Kapselkörper mit einer Seitenwand und mit einem einstückig mit der Seitenwand ausgebildetem Boden. Vorzugsweise ist der Kapselkörper rotationssymmetrisch ausgebildet. Die Kapsel umfasst einen den Kapselkörper abdeckenden Deckel zur Bildung einer geschlossenen Kammer, welche eine Substanz für die Zubereitung eines Getränks enthält. Wenigstens der Boden ist für die Durchleitung einer Flüssigkeit durch die Kammer mit einer ausserhalb der Kapsel angeordneten Einrichtung an einem Penetrationsbereich des Bodens penetrierbar. Der Boden weist einen Versteifungsbereich auf. Ein zentraler Bereich des Bodens ist als Penetrationsbereich ausgebildet, wobei der Versteifungsbereich um den Penetrationsbereich angeordnet ist. Insbesondere ist der Versteifungsbereich rotationssymmetrisch um den Penetrationsbereich angeordnet. Der Versteifungsbereich ist als zumindest zwei abschnittsweise Vertiefungen im Wesentlichen in Umfangsrichtung im Boden ausgebildet. Mit anderen Worten weist der Versteifungsbereich mehrere abschnittsweise Vertiefungen im Wesentlichen in Umfangsrichtung im Boden auf.

Unter einer Vertiefung im Boden wird von hier ab und im Folgenden eine Vertiefung auf einer Aussenseite der Kapsel, d.h. der von der geschlossenen Kammer abgewandten Seite der Kapsel verstanden.

Unter einer abschnittsweisen Vertiefung im Boden im Wesentlichen in Umfangsrichtung wird von hier ab und im Folgenden verstanden, dass die Vertiefung in Umfangsrichtung eine Ausdehnung hat, die kleiner als der Umfang der Kapsel ist.

Unter der Formulierung, dass der Boden Vertiefungen aufweist, wird von hieran und im Folgenden verstanden, dass die Vertiefungen, die auch als Einbuchtungen bezeichnet werden, integraler Bestandteil des Bodens sind. Vertiefungen im Sinne der vorliegenden Anmeldung sind somit also nicht Vertiefungen zwischen externen Elementen am Boden, die beispielsweise an diesem aussen angebracht sind.

Bei der Verwendung von weicherem Material für die Kapsel als Aluminium besteht häufig das Problem, dass diese Kapseln mit üblichen, im Markt befindlichen Vorrichtungen zur Getränkeherstellung nicht zuverlässig durchstochen werden, da dieses weichere Material im Gegensatz zu Aluminium oft nachgiebiger und leichter deformierbar ist, ohne dass die Kapsel mit der entsprechenden Einrichtung der Vorrichtung zur Penetrierung penetriert wird. Dies ist jedoch notwendig ist für den Vorgang der Getränkeherstellung. Beispielsweise werden auch Kunststoffkapseln aus dem Stand der Technik, welche bereits einen versteiften Boden aufweisen, oft nicht zuverlässig penetriert.

Die erfindungsgemässe Kapsel weist nun den Vorteil auf, dass die Kapsel durch den Versteifungsbereich mit abschnittsweisen Vertiefungen im Boden zuverlässig durch handelsübliche Vorrichtungen zur Getränkeherstellung penetrierbar ist, so dass die Getränkeherstellung ermöglicht wird. Zudem ist die Kapsel auch kostengünstig herstellbar, da der Versteifungsbereich als integraler Bestandteil der Kapsel ausgebildet ist und die Kapsel somit beispielsweise mittels eines Tiefziehverfahrens herstellbar ist.

Abschnittsweise Vertiefungen haben insbesondere gegenüber umlaufenden Vertiefungen oder auch umlaufenden Rippen am oder im Boden den Vorteil, dass diese einen besseren Versteifungseffekt bewirken. Umlaufende Vertiefungen oder auch umlaufende Rippen im Boden führen also oft zu einer nicht ausreichenden Versteifung.

Unter einem Penetrationsbereich wird im Sinne der vorliegenden Anmeldung ein Bereich des Bodens verstanden, der von der Einrichtung zur Penetration penetriert wird.

Unter einem Versteifungsbereich wird im Sinne der vorliegenden Anmeldung ein Bereich des Bodens verstanden, in dem die Vertiefungen zur Versteifung angeordnet sind.

Unter einem zentralen Bereich des Bodens wird von hieran und im Folgenden verstanden, dass dieser Bereich eine Fläche darstellt und zumindest den geometrischen Mittelpunkt des Kapselbodens umfasst.

Unter dem Begriff rotationssymmetrisch wird hier und im Folgenden eine Symmetrie bezüglich Rotation um die Längsachse der Kapsel um einen diskreten Winkel oder aber auch um beliebige Winkel verstanden.

Diese Anordnung des Penetrationsbereichs in einem zentralen Bereich des Bodens mit einem darum angeordneten Versteifungsbereich hat den Vorteil, dass dadurch eine sehr gute Versteifung des Penetrationsbereichs erreichbar ist, so dass die Kapsel zuverlässig zu penetrieren ist mit der Einrichtung zur Penetrierung der Vorrichtung zur Getränkeherstellung.

Bevorzugt weist die Vertiefung wenigstens zwei zueinander geneigte Wandabschnitte auf.

Bevorzugt weist die Vertiefung drei zueinander geneigte Wandabschnitte auf. Ein erster Wandabschnitt liegt in einer entlang der Längsachse des Kapselkörpers verlaufenden Schnittebene, d.h. durch die Vertiefung, im Wesentlichen parallel zur Längsachse des Kapselkörpers liegt. Alternativ schliesst der erste Wandabschnitt mit der Längsachse einen Winkel im Bereich von +/- 20°, bevorzugt von +/- 10° und ganz besonders bevorzugt von +/- 5° ein. Ein zweiter Wandabschnitt schliesst mit dem ersten Wandabschnitt einen ersten Aussenwinkel im Bereich von 35° bis 55°, bevorzugt von 40° bis 50°, ein. Ein dritter Wandabschnitt schliesst mit dem zweiten Wandabschnitt einen zweiten Aussenwinkel im Bereich von 35° bis 55°, bevorzugt von 40° bis 50°, ein.

Im Sinne der vorliegenden Anmeldung wird unter einem "Aussenwinkel" ein Winkel zwischen zwei Wandabschnitten verstanden, die sich in einer Linie schneiden, wobei der Winkel auf der der geschlossenen Kammer der Kapsel abgewandten Seite bestimmt wird.

Besonders bevorzugt ist die zumindest eine abschnittsweise Vertiefung stufenförmig ausgebildet und/oder in einer entlang der Längsachse des Kapselkörpers verlaufenden Schnittebene, d.h. durch die Vertiefung, L-förmig ausgebildet. Im Fall der L-förmigen Ausbildung der Vertiefung liegt insbesondere ein Arm der L-Form im Wesentlichen parallel zur Längsachse des Kapselkörpers. Alternativ schliesst dieser Arm der L-Form mit der Längsachse einen Winkel im Bereich von +/- 20°, bevorzugt von +/- 10° und ganz besonders bevorzugt von +/- 5° ein. Insbesondere liegt ein zweiter Arm der L-Form im Wesentlichen senkrecht zur Längsachse oder schliesst mit der Längsachse einen Armwinkel im Bereich von 70° bis 110°, bevorzugt von 80° bis 100° und ganz bevorzugt von 85° bis 95° ein.

Diese Ausgestaltung der Vertiefungen der Kapsel weist den Vorteil auf, dass durch die stufenförmige bzw. L-förmige Ausbildung der abschnittsweisen Vertiefung oder durch die Ausbildung der abschnittsweisen Vertiefung mit drei zueinander geneigten Wandabschnitten eine besonders gute Versteifung des Kapselbodens erzielbar ist. Dadurch wird eine zuverlässige Penetration des Bodens mittels der Einrichtung zur Penetrierung der Vorrichtung zur Getränkeherstellung erreicht.

Die L-förmige Ausbildung der Vertiefung kann bei Bedarf auch mit der abschnittsweisen Vertiefung mit drei zueinander geneigten Wandabschnitten in einer Kapsel kombiniert werden, beispielsweise alternierend. Zudem ist es auch denkbar, die beiden Arme der L-Form mit einem weiteren Wandabschnitt, der dem zweiten Wandabschnitt entspricht, zu kombinieren, wobei die beiden Arme der L-Form durch den zweiten Wandabschnitt miteinander verbunden sind; somit kann eine weitere Ausgestaltungsmöglichkeit der abschnittsweisen Vertiefung mit drei zueinander geneigten Wandabschnitten gebildet werden.

Besonders bevorzugt weist die abschnittsweise Vertiefung zumindest einen Flächenabschnitt parallel zu einer entlang der Längsachse des Kapselkörpers verlaufenden Schnittebene durch die Vertiefung auf oder schliesst mit dieser Schnittebene einen Winkel im Bereich von +/- 45°, bevorzugt von +/- 30° und ganz besonders bevorzugt von +/- 15° ein. Bevorzugt wird ein Winkel im Bereich von +/- 10° und besonders bevorzugt von +/- 5°eingeschlossen.

Diese Ausgestaltung der zumindest einen Vertiefung der Kapsel weist den Vorteil auf, dass durch die Ausbildung der abschnittsweisen Vertiefung mittels der Orientierung des Flächenabschnitts eine weiter verbesserte Versteifung ermöglicht wird.

Insbesondere verläuft die Schnittebene entlang der Längsachse des Kapselkörpers durch den Mittelpunkt des dem zentralen Bereich des Bodens zugewandten Umfangsabschnitts der Vertiefung. Ganz besonders bevorzugt weist der Boden drei bis zehn Vertiefungen auf.

Diese Ausgestaltung hat den Vorteil, dass durch die wählbare Anzahl der Vertiefungen im Boden zur Versteifung eine Anpassung an die jeweiligen Anforderungen bezüglich Steifheit des Bodens möglich ist. Die Anzahl Vertiefungen kann beispielsweise in Abhängigkeit vom gewählten Material des Kapselkörpers oder auch in Abhängigkeit von der Vorrichtung zur Getränkeherstellung, in der die Kapsel verwendet werden soll, erfolgen.

Alternativ bevorzugt ist der Boden zwischen den Vertiefungen als insbesondere dreieckförmiger Steg ausgebildet.

Dies hat den Vorteil der weiteren Verbesserung der Versteifung des Bodens zur Erreichung einer noch zuverlässigeren Penetration des Bodens mittels der Einrichtung zur Penetrierung der Vorrichtung zur Getränkeherstellung.

Alternativ besonders bevorzugt weist die Kapselwand zumindest einen innenseitigen Vorsprung als Stapelschulter auf. Bevorzugt weist die Kapselwand zwei und besonders bevorzugt zumindest drei innenseitige Vorsprünge auf. Zudem weist die Kapselwand insbesondere komplementäre aussenseitige Vertiefungen zu den innenseitigen Vorsprüngen auf.

Unter der Formulierung, dass die Kapselwand komplementäre aussenseitige Vertiefungen zu den innenseitigen Vorsprüngen aufweist, wird hier und im Folgenden verstanden, dass sich die aussenseitigen Vertiefungen an den gleichen Positionen wie die innenseitigen Vorsprünge der Kapselwand befinden.

Unter einem innenseitigen Vorsprung wird im Sinne der vorliegenden Anmeldung verstanden, dass die Kammer zur Aufnahme einer Substanz in der Kapselwand Vorsprünge aufweist.

Diese Ausgestaltung der Kapselwand mit innenseitigen Vorsprüngen hat den Vorteil, dass die noch nicht gefüllten Kapselkörper stapelbar sind und aufgrund der innenseitigen Vorsprünge einfach wieder trennbar sind, da ein Verkeilen der gestapelten Kapseln verhindert wird. Dies hat den Vorteil, dass beispielsweise in einer Produktionslinie zur Abfüllung von Kaffee die Kapselkörper zuverlässig vereinzelt werden können. Beispielsweise können die Kapselkörper mittels eines Greifarms von einem Stapel automatisiert entnommen werden, so dass jeweils zuverlässig nur eine Kapsel in die Abfüllvorrichtung eingeführt wird.

Zusätzlich bevorzugt sind die innenseitigen Vorsprünge umfangmässig voneinander beabstandet.

Unter der Formulierung, dass die innenseitigen Vorsprünge umfangmässig voneinander beabstandet sind, wird von hieran und im Folgenden verstanden, dass die innenseitigen Vorsprünge bei einer Projektion entlang der Kapselwand parallel zur Längsachse der Kapsel nicht vollständig überlappen.

Diese Anordnung der innenseitigen Vorsprünge hat den Vorteil, dass die Kapselkörper einfach und zuverlässig voneinander trennbar sind, wenn diese aufeinander gestapelt sind.

Die aussenseitigen Vertiefungen weisen zudem den Vorteil auf, dass der Kapselkörper aussenseitig gut greifbar ist durch entsprechende Einrichtungen der Abfüllvorrichtung.

Der Kapselkörper besteht aus Kunststoff und besonders bevorzugt aus zumindest einem Biopolymer.

Dies hat den Vorteil, dass der Kapselkörper in der Herstellung energetisch günstiger ist gegenüber dem Stand der Technik, insbesondere gegenüber Kapseln aus Aluminium. Zudem ist auch der nach Gebrauch anfallende Abfall leichter zu entsorgen als bei handelsüblichen Aluminiumkapseln.

Als Kunststoff wird im Sinne der vorliegenden Anmeldung ein organisches Polymer verstanden, das im Wesentlichen aus organischen Molekülen hergestellt wird oder auch eine Biopolymer und beliebige Kombinationen aus diesen Materialien.

Unter einem Biopolymer wird im Sinne der vorliegenden Anmeldung ein natürlich vorkommendes Polymer verstanden und insbesondere ein biologisch abbaubares Biopolymer.

Erfindungsgemäss besteht der Kapselkörper zumindest aus zwei Polymerschichten. Dabei wird der Kapselkörper mittels eines Tiefziehverfahrens hergestellt, wobei besonders bevorzugt eine äussere Schicht des Kapselkörpers aus Polyethylen besteht.

Die Herstellung des Kapselkörpers aus zumindest zwei Polymerschichten hat den Vorteil, dass diese entsprechend dem Verwendungszweck beispielsweise in Abhängigkeit von der zu verwendenden Vorrichtung zur Getränkeherstellung gewählt werden können. Durch den Schichtaufbau des Kapselkörpers kann zudem gewählt werden, welche Eigenschaften beispielsweise bezüglich Weichheit die äussere oder auch innere Schicht aufweisen soll. Insbesondere besteht eine der Schichten aus Polyethylen und die andere aus Polypropylen. Alternativ kann auch eine der Schichten aus Ethylen-Vinylalkohol bestehen.

Insbesondere vorteilhaft besteht der Kapselkörper aus zumindest drei Schichten, besonders vorteilhaft zumindest vier Schichten und ganz besonders vorteilhaft aus zumindest fünf Schichten.

Insbesondere bestehen diese Schichten jeweils aus einem der folgenden Materialien oder einer beliebigen Kombination daraus: Polypropylen, Polyethylen, Ethylen-Vinylalkohol.

Die Herstellung des Kapselkörpers mittels eines Tiefziehverfahrens weist den Vorteil auf, dass die Herstellung des Kapselkörpers mittels dieses Verfahrens kostengünstig ist und einen hohen Durchsatz durch die Vorrichtung zum Tiefziehen erlaubt.

Zusätzlich ganz besonders bevorzugt weist der Kapselkörper einen seitlich über die Kapselwand abstehenden Flansch auf zur Befestigung des Deckels.

Dies hat den Vorteil, dass der Deckel zuverlässig an der Kapselwand befestigt werden kann, da der Kapselkörper im Bereich des Flansches eine ausreichend grosse Fläche zur Befestigung des Deckels aufweist.

Zudem hat der Flansch den Vorteil, dass die Positionierung der Kapsel in der Vorrichtung zur Getränkeherstellung verbessert wird.

Zudem bevorzugt ist der Deckel aus einer Membran, einer perforierten Folie oder Filterpapier gebildet. Insbesondere ist die Membran als Aluminiumfolie ausgebildet. Alternativ kann der Deckel auch aus einer beliebigen Kombination von Aluminiumfolie, perforierter Folie und Filterpapier gebildet sein.

Unter einer Membran wird im Sinne der vorliegenden Anmeldung eine für Luft im Wesentlichen undurchlässige Folie verstanden, die in der Getränkeherstellungsvorrichtung aufreissbar ist.

Die Verwendung von einer Membran und insbesondere einer Aluminiumfolie als Deckel hat den Vorteil, dass damit die Kapsel im Wesentlichen luftdicht verschliessbar ist und somit die Kapsel aromadicht ist. Somit ist die Verpackung der Kapsel für den Verkauf in einer zusätzlichen, luftdichten Hülle nicht notwendig, was kostengünstig ist und die Handhabung der Kapsel zur Getränkeherstellung vereinfacht.

Die Verwendung einer perforierten Folie oder Filterpapier oder beliebigen Kombinationen daraus als Deckel hat den Vorteil, dass in der Vorrichtung zur Getränkeherstellung keine Einrichtungen zum Perforieren oder Aufreissen des Deckels benötigt werden zur Abführung des Getränks durch den Deckel. Zudem kann die Perforation der Folie oder auch die Struktur, wie beispielsweise die Grösse und Anordnung der Filteröffnungen, des Filterpapiers so gewählt werden, dass ein optimaler Fluss der Flüssigkeit durch die Kapsel erzielt wird zur Erzielung einer hohen Qualität des hergestellten Getränks. Hierdurch kann insbesondere erreicht werden, dass ein möglichst grosser Anteil der extrahierbaren Substanz auch extrahiert wird.

Bevorzugt ist der Penetrationsbereich domförmig ausgebildet.

Der Begriff "domförmig" bedeutet im Sinne der vorliegenden Anmeldung einen gekrümmten Bereich des Bodens, wobei die Krümmung nach aussen, d.h. von der geschlossenen Kammer weg, gerichtet ist.

Dies hat den Vorteil, dass der Boden bei gewissen Vorrichtungen zur Herstellung beispielsweise eines Kaffeegetränks im Betrieb zu der Einrichtung zur Penetrierung des Bodens hingewendet ist und damit die Penetrierung zuverlässiger erfolgen kann.

Besonders bevorzugt weist der Penetrationsbereich eine Zentrums-Einbuchtung auf, welche insbesondere kreisförmig ist. Insbesondere wird durch die Zentrums-Einbuchtung die Bildung einer geschlossenen Versteifungslinie erzielt.

Unter einer "Zentrums-Einbuchtung" wird im Sinne der vorliegenden Anmeldung eine Einbuchtung, d.h. eine Vertiefung, im Boden verstanden, die den geometrischen Mittelpunkt des Kapselbodens umfasst.

Unter einer "geschlossenen Versteifungslinie" wird im Sinne der vorliegenden Anmeldung eine im Penetrationsbereich um die Zentrums-Einbuchtung umlaufende und daher geschlossene Linie verstanden.

Diese Ausgestaltung des Penetrationsbereichs mit einer Zentrums-Einbuchtung hat den Vorteil, dass der zwischen dem Versteifungsbereich und der Zentrums-Einbuchtung liegende Bereich weiter versteift wird zur noch zuverlässigeren Penetrierbarkeit durch handelsübliche Vorrichtungen zur Getränkeherstellung.

Erfindungsgemäss weist die Kapselwand zumindest zwei aussenseitig im Wesentlichen parallel zur Längsachse angeordnete Versteifungsrippen auf. Dabei bestehen die Versteifungsrippen aus dem gleichen Material wie die Kapselwand und der Kapselkörper umfassend die Kapselwand und die Versteifungsrippen sind einstückig ausgebildet.

Unter der Formulierung "im Wesentlichen parallel zur Längsachse angeordnet" bezüglich der Anordnung der Versteifungsrippe wird im Sinne der vorliegenden Anmeldung verstanden, dass die Versteifungsrippe an der Kapselwand angeordnet ist und die Längsachse der Versteifungsrippe im Wesentlichen parallel zur Längsachse des Kapselkörpers liegt. Bei der Verwendung beispielsweise eines kegelstumpfförmigen Kapselkörpers schliessen die Längsachse der Versteifungsrippe sowie auch die Längsachse des Kapselkörpers einen Winkel im Wesentlichen gleich dem kegelstumpfwinkel ein; auch bei einer derartigen Ausgestaltung des Kapselkörpers wird im Sinne der vorliegenden Anmeldung verstanden, dass die Längsachse des Kapselkörpers und die Längsachse der Versteifungsrippe im Wesentlichen parallel zueinander verlaufen.

Unter einer "aussenseitigen Anordnung" der Versteifungsrippe wird im Sinne der vorliegenden Anmeldung verstanden, dass die Versteifungsrippe auf der der geschlossenen Kammer abgewandten Seite angeordnet ist.

Die Anordnung einer Versteifungsrippe auf der Kapselwand hat den Vorteil, dass die Stabilität des Kapselkörpers gegenüber Deformationskräften parallel und senkrecht zur Längsachse des Kapselkörpers erhöht wird und damit beispielsweise die Handhabung während des Abfüllprozesses der Kapsel zuverlässiger wird. Dies hat zudem den Vorteil, dass beispielsweise in einer Produktionslinie zur Abfüllung von Kaffee die Kapselkörper noch zuverlässiger vereinzelt werden können.

Die Kapselwand weist zumindest zwei Versteifungsrippen auf, die umfangmässig voneinander beabstandet sind.

Dies hat den Vorteil der weiteren Erhöhung der Stabilität wie vorstehend erläutert.

Besonders bevorzugt weist die Versteifungsrippe eine Rippenlänge kleiner als die Kapselwandlänge auf.

Unter einer "Rippenlänge" wird im Sinne der vorliegenden Anmeldung die längste Ausdehnung der Versteifungsrippe verstanden.

Insbesondere umfasst die Kapselwandlänge nicht den Boden der Kapsel mit beispielsweise dem Versteifungsbereich.

Die Rippenlänge und die Kapselwandlänge werden im Sinne der vorliegenden Anmeldung gemäss einer Projektion auf die Längsachse bestimmt; bei Verwendung beispielsweise eines kegelstumpfförmigen Kapselkörpers entspricht die Kapselwandlänge und die Rippenlänge einer Projektion senkrecht zur Längsachse auf die Längsachse.

Dies hat den Vorteil der besseren Anpassbarkeit der äusseren Form der Kapsel an verschiedene Getränkeherstellungsvorrichtungen.

Ganz besonders bevorzugt ist der Kapselkörper kegelstumpfförmig ausgebildet, wobei ein Kegelstumpfwinkel zwischen der Längsachse und der Kapselwand entlang der Längsachse abschnittsweise unterschiedlich ist.

Unter der Formulierung, dass "ein Kegelstumpfwinkel entlang der Längsachse abschnittsweise unterschiedlich ist" wird im Sinne der vorliegenden Anmeldung verstanden, dass entlang der Längsachse die Kapselwand mit der Längsachse beispielsweise in einem ersten Abschnitt einen ersten Kegelstumpfwinkel einschliesst und in einem zweiten Abschnitt einen zweiten Kegelstumpfwinkel, wobei der erste und der zweite Kegelstumpfwinkel voneinander abweichen.

Bevorzugt weist der Kapselkörper zumindest drei Abschnitte mit unterschiedlichem Kegelstumpfwinkel auf.

Die Kegelstumpfwinkel schliessen mit der Längsachse einen Winkel w im Bereich von 1° bis 30°, bevorzugt von 2° bis 25° und besonders bevorzugt von 4° bis 20° ein. Insbesondere ist der Winkel w eines ersten Abschnittes, welcher dem Flansch zugewandt ist, grösser als der Winkel w des zweiten Abschnitts, wobei der Winkel w des zweiten Abschnitts grösser als der Winkel w des dritten Abschnitts ist. Der dritte Abschnitt ist der dem Boden zugewandte Abschnitt.

Diese Ausgestaltung des Kapselkörpers mit einer Kegelstumpfform mit abschnittweise unterschiedlichen Kegelstumpfwinkeln hat den Vorteil, dass die Stabilität bezüglich einer Krafteinwirkung auf den Kapselkörper im Wesentlichen entlang der Längsachse des Kapselkörpers verbessert wird, was zu einer höheren Zuverlässigkeit bei der Penetrierung der Kapsel durch die Einrichtung zur Penetrierung erzielt wird.

Ein zusätzlicher Aspekt der Erfindung betrifft eine Kapsel bestehend aus einem vorzugsweise rotationssymmetrisch ausgebildeten Kapselkörper mit einer Seitenwand und mit einem einstückig mit dieser ausgebildetem Boden, sowie mit einem den Kapselkörper abdeckenden Deckel zur Bildung einer geschlossenen Kammer, welche eine Substanz für die Zubereitung eines Getränks enthält. Der Kapselkörper besteht aus Kunststoff. Bevorzugt besteht der Kapselkörper aus zwei Polymerschichten, besonders bevorzugt aus zumindest zwei Polymerschichten.

Bevorzugt ist eine äussere Schicht der zwei Polymerschichten weicher als eine innere Schicht. Insbesondere ist die Weichheit der äusseren Schicht derart wählbar, dass eine Dichtfunktion bei bestimmungsgemässem Gebrauch der Kapsel in der Vorrichtung erzielbar ist.

Unter einer "äusseren Schicht" wird im Sinne der vorliegenden Anmeldung die bezüglich der Kammer weiter aussen liegende, d.h. von der Kammer abgewandte Schicht verstanden. Insbesondere ist die äussere Schicht diejenige Schicht, die bei bestimmungsgemässem Gebrauch der Kapsel in der Vorrichtung beispielsweise mit dem Kapselhalter in Kontakt steht.

Durch den Schichtaufbau des Kapselkörpers kann vorteilhaft gewählt werden, welche Eigenschaften beispielsweise bezüglich Weichheit die äussere Schicht aufweisen soll, wodurch beispielsweise das Verhalten der Kapsel in der Vorrichtung bei bestimmungsgemässem Gebrauch an die Vorrichtung anpassbar ist.

Insbesondere ist eine Glasübergangstemperatur der äusseren Schicht kleiner als eine Glasübergangstemperatur der inneren Schicht. Bevorzugt beträgt der Temperaturunterschied zwischen den Glasübergangstemperaturen zumindest 5°C, besonders bevorzugt zumindest 10°C. Bevorzugt liegt die Glasübergangstemperatur der äusseren Schicht im Bereich von 60°C bis 90°C, besonders bevorzugt von 65°C bis 85°C. Bevorzugt ist die Glasübergangstemperatur der inneren Schicht grösser als 85°C, besonders bevorzugt grösser als 90°C und ganz besonders bevorzugt grösser als 95°C. Besonders bevorzugt besteht eine der Schichten aus Polyethylen und die andere aus Polypropylen. Insbesondere besteht die äussere Schicht aus Polyethylen und die innere Schicht aus Polypropylen. Alternativ kann auch eine der Schichten aus Ethylen-Vinylalkohol bestehen.

Insbesondere vorteilhaft besteht der Kapselkörper aus zumindest drei Schichten, besonders vorteilhaft zumindest vier Schichten und ganz besonders vorteilhaft aus zumindest fünf Schichten.

Ganz besonders bevorzugt bestehen diese Schichten jeweils aus einem der folgenden Materialien oder einer beliebigen Kombination daraus: Polypropylen, Polyethylen, Ethylen-Vinylalkohol.

Bevorzugt ist im Wesentlichen die ganze Kapseloberfläche, die durch die äussere Schicht gebildet wird, weicher als eine innere Schicht ausgebildet.

Unter der "Kapseloberfläche" wird die von der Kammer abgewandte Oberfläche des Kapselkörpers verstanden.

Insbesondere wird der Kapselkörper mittels eines Tiefziehverfahrens hergestellt.

Besonders bevorzugt weist der Kapselkörper einen seitlich über die Kapselwand abstehenden Flansch auf zur Befestigung des Deckels.

Bevorzugt ist der Deckel aus einer Membran, einer perforierten Folie oder Filterpapier gebildet. Insbesondere ist die Membran als Aluminiumfolie ausgebildet. Alternativ kann der Deckel auch aus einer beliebigen Kombination von Aluminiumfolie, perforierter Folie und Filterpapier gebildet sein.

Besonders bevorzugt weist die Kapselwand zumindest eine aussenseitig im Wesentlichen parallel zur Längsachse angeordnete Versteifungsrippe auf. Bevorzugt besteht die Versteifungsrippe aus dem gleichen Material wie die Kapselwand und besonders bevorzugt ist der Kapselkörper umfassend die Kapselwand und die Versteifungsrippe einstückig ausgebildet.

Bevorzugt weist die Kapselwand zumindest zwei Versteifungsrippen auf, die umfangmässig voneinander beabstandet sind.

Besonders bevorzugt weist die Versteifungsrippe eine Rippenlänge kleiner als die Kapselwandlänge auf.

Ganz besonders bevorzugt ist der Kapselkörper kegelstumpfförmig ausgebildet, wobei ein Kegelstumpfwinkel zwischen der Längsachse und der Kapselwand entlang der Längsachse abschnittsweise unterschiedlich ist.

Bevorzugt weist der Kapselkörper zumindest drei Abschnitte mit unterschiedlichem Kegelstumpfwinkel auf.

Alternativ besonders bevorzugt weist die Kapselwand zumindest einen innenseitigen Vorsprung als Stapelschulter auf. Bevorzugt weist die Kapselwand zwei und besonders bevorzugt zumindest drei innenseitige Vorsprünge auf. Zudem weist die Kapselwand insbesondere komplementäre aussenseitige Vertiefungen zu den innenseitigen Vorsprüngen auf.

Zusätzlich bevorzugt sind die innenseitigen Vorsprünge umfangmässig voneinander beabstandet.

Die vorstehend erläuterten technischen Merkmale bezüglich des zusätzlichen Aspekts der vorliegenden Erfindung weisen die weiter oben erläuterten Vorteile auf.

Ein weiterer Aspekt der vorliegenden Erfindung betrifft einen Kapselkörper für eine Kapsel wie oben beschrieben.

Da der Kapselkörper für die oben beschriebene Kapsel verwendet wird, weist dieser alle oben beschriebenen Vorteile auf.

Ein weiterer Aspekt der vorliegenden Erfindung ist gerichtet auf eine Portionsverpackung umfassend eine mit einer Substanz gefüllte Kapsel wie oben beschrieben. Insbesondere enthält diese Kapsel Kaffee. Die Kapsel ist von einer im Wesentlichen luftdichten Hülle umschlossen.

Die Kapsel in der Portionsverpackung entspricht der oben beschriebenen Kapsel und weist deshalb deren Vorteile auf.

Diese Portionsverpackung weist den Vorteil auf, dass die Kapsel aromadicht verschlossen werden kann, was insbesondere bei Kaffee vorteilhaft ist. Diese Hülle wird insbesondere vorteilhaft verwendet bei Verwendung einer perforierten Folie oder Filterpapier als Deckel wie oben beschrieben, um die Kapsel für die Lagerung und den Transport aromadicht, d.h. im Wesentlichen luftdicht, zu verschliessen. Auch bei Verwendung einer Aluminiumfolie kann die Verwendung der Hülle zum im Wesentlichen luftdichten Verschliessen vorteilhaft sein, falls die Aluminiumfolie Beschädigungen aufweist oder nicht im Wesentlichen luftdicht mit dem Kapselkörper verbunden ist.

Ein zusätzlicher Aspekt der vorliegenden Erfindung ist gerichtet auf ein System umfassend einer mit einer Substanz gefüllten Kapsel wie oben beschrieben oder mit einer Portionsverpackung wie oben beschrieben. Weiterhin umfasst das System eine Getränkeherstellungsvorrichtung, wobei die Getränkeherstellungsvorrichtung einen Kapselhalter aufweist zur Aufnahme der Kapsel sowie eine Einrichtung zur Penetrierung eines Bodens der Kapsel. Weiterhin weist die Getränkeherstellungsvorrichtung eine Einrichtung zur Zuführung einer Flüssigkeit in die Kapsel zur Extrahierung der Substanz auf zur Herstellung eines Getränks. Das Getränk ist durch einen Deckel der Kapsel abführbar.

Dieses System umfasst eine Kapsel wie oben beschrieben und weist deshalb alle oben beschriebenen Vorteile auf.

Die Getränkeherstellungsvorrichtung weist zudem insbesondere eine Einrichtung zur Abführung des Getränks auf, beispielsweise in einen Trinkbehälter.

Im Falle der Verwendung einer Membran und insbesondere einer Aluminiumfolie als Deckel, die nicht perforiert ist, weist die Getränkeherstellungsvorrichtung zusätzlich eine Aufreissvorrichtung auf, so dass das Getränk durch den Deckel abführbar ist.

Im Falle der Verwendung einer Kapsel mit perforierter Folie oder Filterpapier als Deckel ist keine Aufreisseinrichtung in der Getränkeherstellungsvorrichtung notwendig. Es ist jedoch auch denkbar, eine Getränkeherstellungsvorrichtung mit einer Aufreisseinrichtung in Verbindung mit einer Kapsel mit perforierter Folie oder Filterpapier als Deckel zu verwenden.

Ein zusätzlicher Aspekt der vorliegenden Erfindung ist gerichtet auf die Verwendung einer mit Kaffee gefüllten Kapsel wie oben beschrieben oder einer Portionsverpackung wie oben beschrieben zur Herstellung eines Kaffeegetränks.

Diese Verwendung weist alle beschriebenen Vorteile der oben beschriebenen Kapsel oder der Portionsverpackung auf.

Ein weiterer Aspekt der vorliegenden Erfindung ist gerichtet auf ein Verfahren zur Getränkeherstellung. In einem ersten Schritt des Verfahrens erfolgt das Einsetzen einer mit einer Substanz befüllten Kapsel wie oben beschrieben in einen Kapselhalter einer Getränkeherstellungsvorrichtung. Anschliessend erfolgt ein Penetrieren eines Bodens der Kapsel mittels einer Einrichtung zur Penetrierung der Getränkeherstellungsvorrichtung. Anschliessend wird eine Flüssigkeit in die Kapsel zugeführt unter einem Druck im Bereich von 1 bar bis 20 bar. Die Flüssigkeit ist insbesondere erhitzt, wobei es sich insbesondere um Wasser handelt. Mittels der zugeführten Flüssigkeit erfolgt ein Extrahieren eines Getränks aus der Substanz in der Kapsel. Anschliessend wird das Getränk durch einen Deckel der Kapsel abgeführt. Der Deckel weist Öffnungen zur Abführung des Getränks auf. Alternativ wird durch die zugeführte Flüssigkeit unter Zusammenwirkung mit einer Aufreisseinrichtung der Getränkeherstellungsvorrichtung der Deckel aufgerissen zur Abführung des Getränks.

In dem Verfahren zur Getränkeherstellung wird eine Kapsel wie oben beschrieben verwendet. Dieses Verfahren weist somit alle Vorteile der oben beschriebenen Kapsel auf.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: Seitenansicht einer nicht erfindungsgemässen Kapsel;
- Figur 2:: Draufsicht auf die Kapsel gemäss Figur 1;
- Figur 3:: Querschnitt der Kapsel gemäss Figur 1 aus anderem Blickwinkel, gefüllt mit einer Substanz;
- Figur 4:: perspektivische Ansicht von oben eines Kapselkörpers der Kapsel gemäss Figur 1;
- Figur 5:: schematische Darstellung eines Systems bestehend aus Kapsel und Getränkeherstellungsvorrichtung in einer ersten Position;
- Figur 6:: System gemäss Figur 5 bestehend aus Kapsel und Getränkeherstellungsvorrichtung in einer zweiten Position;
- Figur 7:: schematische Darstellung einer Portionsverpackung umfassend eine mit einer Substanz gefüllten Kapsel mit einer Hülle;
- Figur 8:: teilgeschnittene Seitenansicht einer alternativen Kapsel;
- Figur 9:: teilgeschnittene Seitenansicht einer weiteren alternativen Kapsel;
- Figur 10:: perspektivische Ansicht von oben eines erfindungsgemässen Kapselkörpers mit Versteifungsrippen;
- Figur 11:: Seitenansicht der Kapsel gemäss Figur 10;
- Figur 12:: Draufsicht auf die Kapsel gemäss Figur 10;
- Figur 13:: Querschnitt der Kapsel gemäss Figur 10.

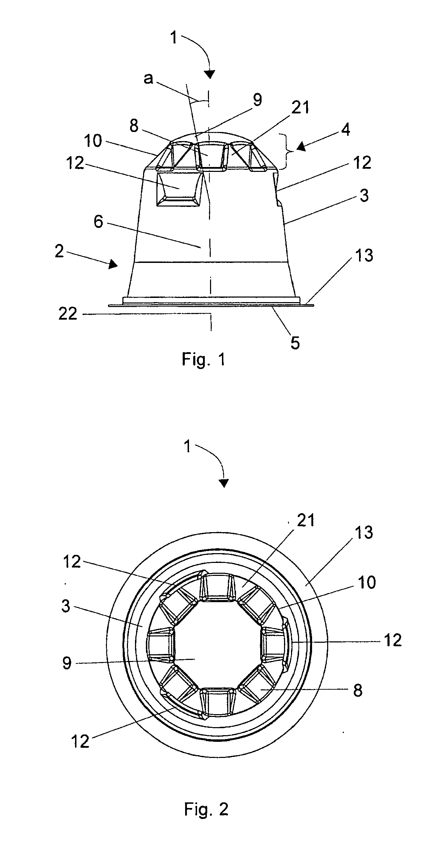

In Figur 1 ist in einer Seitenansicht eine Kapsel 1 senkrecht zur Längsachse 22 der Kapsel 1 dargestellt.

Die Kapsel 1 weist einen Kapselkörper 2 auf mit einer Seitenwand 3 und mit einem einstückig mit diesem ausgebildeten Boden 4. Der Boden 4 ist domförmig ausgebildet. Weiterhin weist die Kapsel 1 einen Deckel 5 auf, der hier aus einer Aluminiumfolie besteht, welche nicht perforiert ist. Der Deckel 5 ist an einem Flansch 13 angebracht.

Der Kapselkörper 2 sowie der Deckel 5 bilden eine geschlossene Kammer 6, in welche eine hier nicht dargestellte Substanz eingefüllt ist, bei der es sich hier um Kaffee handelt.

Der Kapselkörper 2 weist in dem Boden 4 des Kapselkörpers 2 einen Penetrationsbereich 9 auf sowie einen Versteifungsbereich 10. Der Versteifungsbereich 10 ist um den Penetrationsbereich 9 angeordnet. In dem Versteifungsbereich 10 weist der Boden 4 abschnittsweise Vertiefungen 8 auf. Zwischen diesen abschnittsweisen Vertiefungen 8 ist der Boden 4 im Versteifungsbereich 10 in Form dreieckförmiger Stege 21 ausgebildet zur besseren Versteifung des Bodens 4 der Kapsel 1. Die abschnittsweisen Vertiefungen 8 im Versteifungsbereich 10 sind stufenförmig ausgebildet.

In der Seitenwand 3 der Kapsel 1 sind hier zwei von drei voneinander umfangmässig beabstandeten aussenseitigen Vertiefungen 12 sichtbar, die komplementär zu in der geschlossenen Kammer 6 angeordneten innenseitigen Vorsprüngen (hier nicht sichtbar) sind.

Ein Flächenabschnitt der Vertiefung 8 schliesst mit der Schnittebene parallel zur Längsachse 22 einen Winkel a von 10° ein.

In Figur 2 ist eine Draufsicht auf die Kapsel gemäss Figur 1 dargestellt parallel zur Längsachse der Kapsel 1. Gleiche Referenzzeichen bezeichnen gleiche Merkmale in allen Figuren und werden deshalb nur bei Bedarf erneut erläutert.

Bezüglich der Vertiefungen 8 ist der Versteifungsbereich 10 rotationssymmetrisch bezüglich diskreter Winkel um den Penetrationsbereich 9 angeordnet, d.h. bezüglich Drehungen um im Wesentlichen jeweils 1/8 einer vollen Rotation um 360°.

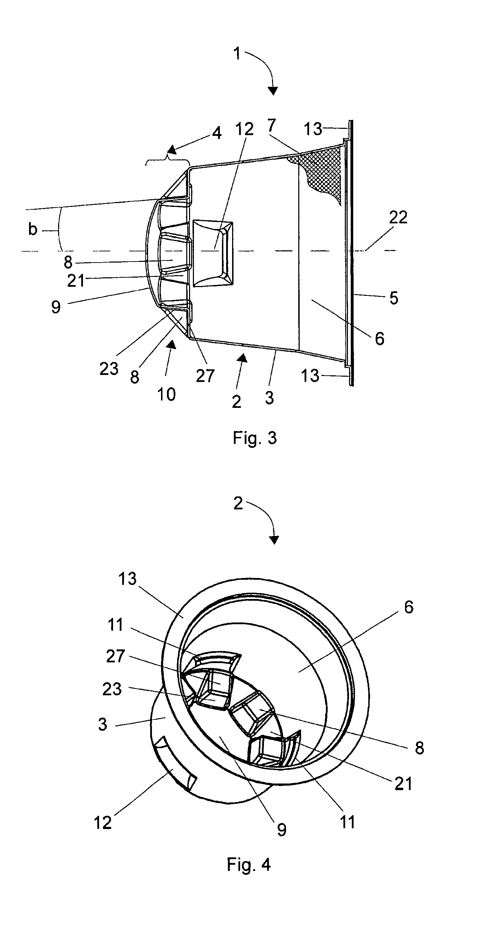

In Figur 3 ist eine erfindungsgemässe Kapsel 1 in einem Querschnitt gemäss Figur 1 dargestellt, beinhaltend eine Substanz 7.

Die Kapsel 1 umfasst einen Kapselkörper 2 mit einer Seitenwand 3. An einem Flansch 13 ist hier im Unterschied zur Figur 1 ein als perforierte Folie ausgebildeter Deckel 5 angebracht zur Bildung der geschlossenen Kammer 6, in der die Substanz 7 aufgenommen ist.

Die abschnittsweisen Vertiefungen 8 sind stufenförmig ausgebildet und weisen in einer Schnittebene parallel zur Längsachse 22 des Kapselkörpers eine L-Form auf. Ein Arm 23 der L-Form der abschnittsweisen Vertiefung 8 schliesst mit der Längsachse 22 einen Winkel b von 5° ein. Ein zweiter Arm 27 schliesst mit der Längsachse 22 einen Winkel von 90° ein.

In Figur 4 ist in perspektivischer Darstellung von oben ein Kapselkörper 2 gemäss Figur 1 dargestellt. Deutlich sichtbar sind hier die nach innen gestülpten, abschnittsweisen Vertiefungen 8.

Der Kapselkörper 2 weist einen seitlich über eine Kapselwand 3 abstehenden Flansch 13 auf, an dem ein Deckel befestigbar ist. Die innenseitigen Vorsprünge 11, d.h. die Stapelschultern, dienen der Vereinzelbarkeit der Kapseln, wenn diese aufeinander gestapelt sind und zur Abfüllung beispielsweise mit Kaffee in eine entsprechende Abfüllvorrichtung gefördert werden sollen.

Der Kapselkörper 2 weist eine Kammer 6 auf, die mit einem hier nicht gezeigten Deckel verschliessbar ist.

Ein Boden des Kapselkörpers 2 weist einen Penetrationsbereich 9 sowie um diesen herum angeordnete, abschnittsweise Vertiefungen 8 auf. Die abschnittsweisen Vertiefungen 8 im Boden sind als Erhöhungen in die Kammer 6 ausgebildet. Zwischen den abschnittsweisen Vertiefungen 8 werden dreieckförmige Stege 21 gebildet.

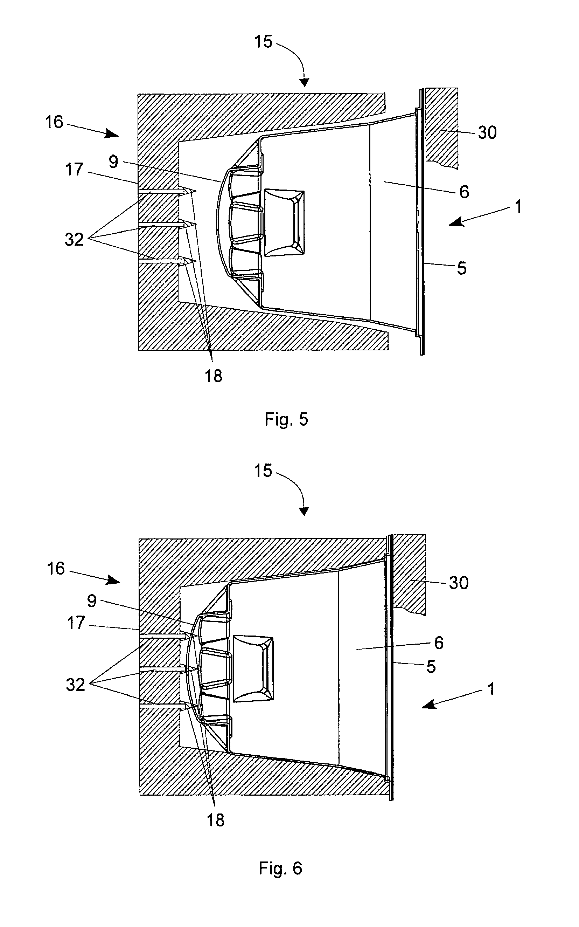

In Figur 5 ist schematisch ein System 15 umfassend eine Getränkeherstellungsvorrichtung 16 mit einer Siebplatte 30 und eine Kapsel 1 gemäss Figur 1 dargestellt.

Die Kapsel 1 ist mit einer nicht gezeigten Substanz, bei der es sich hier um Kaffee handelt, gefüllt, und teilweise in einen Kapselhalter 17 zur Aufnahme der Kapsel 1 eingeführt. Der Kapselhalter 17 weist drei Einrichtungen 18 zur Penetrierung eines Penetrationsbereichs 9 der Kapsel 1 auf. Durch diese Einrichtungen zur Penetrierung kann erhitztes Wasser durch die Öffnungen 32 in die Kapsel 1 gefördert werden zur Extraktion eines Getränks, welches anschliessend durch einen Deckel 5 der Kapsel 1, der hier im Unterschied zur Figur 1 als Filter ausgebildet ist, durch die Siebplatte 30 der Getränkeherstellungsvorrichtung 16 abgeführt wird. In der gezeigten Offenstellung sind die Siebplatte 30 und der Deckel 5 voneinander beabstandet.

In Figur 6 ist das System 15 umfassend die Kapsel 1 in einer zweiten Position, d.h. einer Geschlossenstellung, dargestellt.

In der hier gezeigten Darstellung wurde der Penetrationsbereich 9 der Kapsel 1 durch die Einrichtung 18 zur Penetrierung bereits penetriert. Durch die Einrichtung 18 zur Penetrierung ist, wie bereits zu Figur 5 erläutert, erhitztes Wasser unter einem Druck von hier 15 bar in die Kapsel förderbar. Hierdurch wird die kaffeehaltige Substanz 7 extrahiert und durch einen Deckel 5, der hier im Unterschied zur Figur 1 als perforierte Folie ausgebildet ist, aus der Kapsel durch die Siebplatte 30 der Getränkeherstellungsvorrichtung 16 gefördert in ein nicht dargestelltes Trinkgefäss.

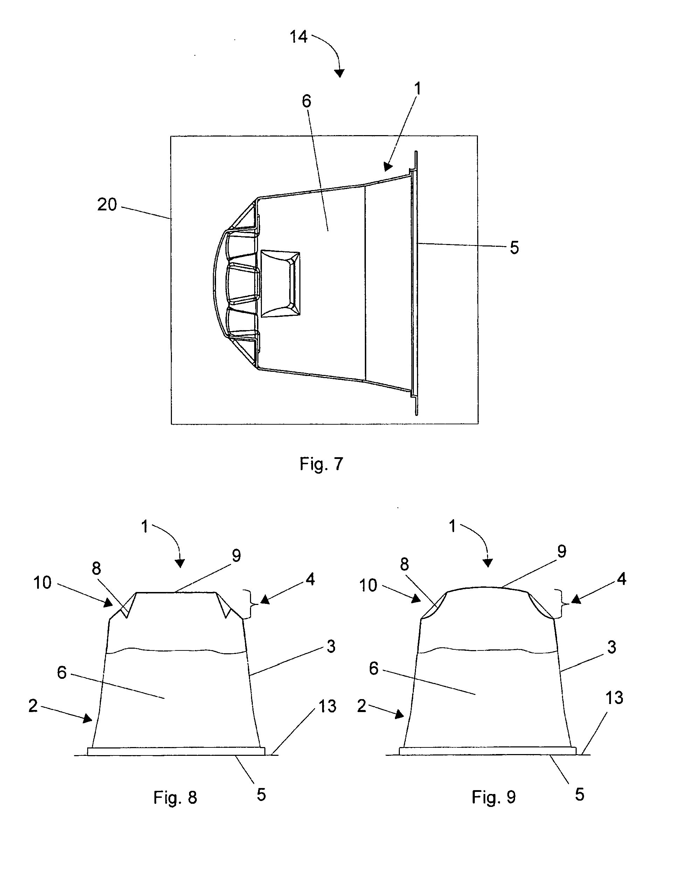

In Figur 7 ist eine Portionsverpackung 14 dargestellt umfassend eine Kapsel 1 gemäss Figur 1 gefüllt mit einer kaffeehaltigen Substanz. Die Kapsel 1 weist einen Deckel 5 auf, der hier im Unterschied zur Figur 1 als Filterpapier ausgebildet ist und nicht aromadicht ist. Für den Transport und/oder die Lagerung der Kapsel 1 ist diese durch eine Hülle 20 verpackt und im Wesentlichen luftdicht verschlossen, um eine aromadichte Verpackung zu erreichen.

In Figur 8 ist eine teilgeschnittene Seitenansicht einer alternativen Kapsel 1 dargestellt. Die vorliegende Kapsel 1 weist lediglich zwei Vertiefungen 8 auf. Im Unterschied zur Kapsel 1 gemäss Figur 1 sind die abschnittsweisen Vertiefungen 8 im Boden 4 hier im Querschnitt als zwei zueinander geneigte Wandabschnitte mit spitzem Winkel zueinander ausgebildet. Zudem ist der Penetrationsbereich 9 als flacher Bereich ausgebildet.

In Figur 9 ist eine teilgeschnittene Seitenansicht einer weiteren alternativen Kapsel 1 dargestellt. Der Boden 4 weist einen Penetrationsbereich 9 und einen Versteifungsbereich 10 auf, der zwei abschnittsweise Vertiefungen 8 mit im Querschnitt bogenförmiger Ausbildung aufweist.

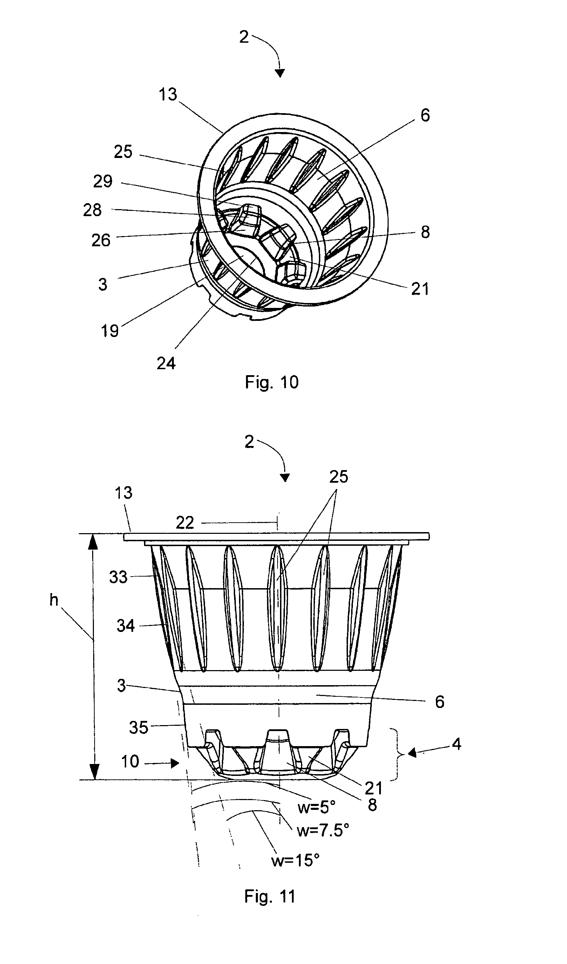

In Figur 10 ist in perspektivischer Darstellung von oben ein Kapselkörper 2 mit sechzehn Versteifungsrippen 25 dargestellt.

Im Unterschied zur Darstellung gemäss Figur 4 weist die vorliegende Kapsel im Boden eine Zentrums-Einbuchtung 19 auf mit einer Versteifungslinie 24. Die Vertiefung 8 weist drei zueinander geneigte Wandabschnitte auf mit einem ersten Wandabschnitt 26, welcher dem Arm in Figur 3 entspricht. Zusätzlich weist die Vertiefung einen zweiten Wandabschnitt 28 und einen dritten Wandabschnitt 29 auf. Der dritte Wandabschnitt 29 gemäss Figur 10 entspricht im Wesentlichen dem zweiten Arm gemäss Figur 3.

In Figur 11 ist in einer Seitenansicht die Kapsel gemäss Figur 10 dargestellt. Der Kapselkörper 2 weist eine Höhe H von etwa 29 mm auf.

Der Kapselkörper 2 ist einstückig ausgebildet mit den an der Kapselwand 3 angeordneten Versteifungsrippen 25 und dem Boden 4 mit dem Versteifungsbereich 10. Der Kapselkörper besteht aus einem Biopolymer.

Der Kapselkörper 2 ist kegelstumpfförmig ausgebildet, wobei ein Kegelstumpfwinkel w zwischen der Längsachse 22 und der Kapselwand 3 entlang der Längsachse abschnittsweise unterschiedlich ist. In einem ersten Abschnitt 33 der Kapselwand weist der Kapselkörper einen Kegelstumpfwinkel von etwa w = 15° auf, in einem zweiten Abschnitt 34 von etwa w = 7.5° und in einem dritten Abschnitt 35 von etwa w = 5°.

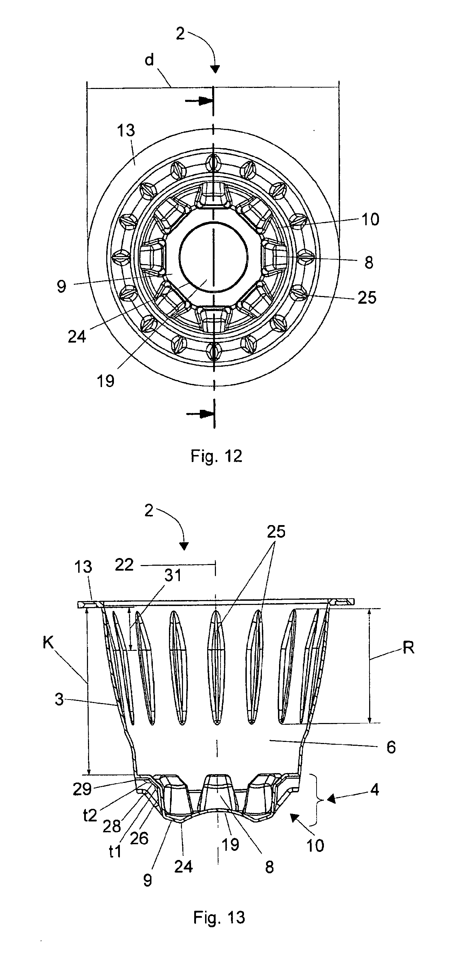

In Figur 12 ist eine Draufsicht auf einen Kapselkörper 2 gemäss Figur 10 dargestellt. Die fettgedruckte gestrichelte Linie stellt eine Schnittlinie dar, wobei die entsprechende Schnittdarstellung in Figur 13 gezeigt ist.

Der Kapselkörper 2 weist einen Durchmesser D von etwa 37 mm auf am Flansch 13.

In Figur 13 ist die Schnittdarstellung entlang der in Figur 12 angedeuteten Schnittlinie dargestellt.

Eine Rippenlänge R von etwa 16 mm ist kleiner als eine Kapselwandlänge K von etwa 22 mm.

Der zu Figur 11 erläuterte Bereich mit einem Kegelstumpfwinkel W = 15° entspricht dem Konusabschnitt 31 gemäss Figur 13. Der Konusabschnitt 31 weist eine Länge von etwa 6 mm auf.

Der Boden 4 umfassend den Versteifungsbereich 10 weist Vertiefungen 8 auf mit einem ersten Wandabschnitt 26, einem zweiten Wandabschnitt 28 und einem dritten Wandabschnitt 29 auf.

Der erste Wandabschnitt 26 schliesst mit der Längsachse 22 einen Winkel b von ca. 5° ein. Der zweite Wandabschnitt 28 schliesst mit dem ersten Wandabschnitt einen ersten Aussenwinkel t1 von 50° ein. Der dritte Wandabschnitt 29 schliesst mit dem zweiten Wandabschnitt 28 einen zweiten Aussenwinkel t2 von 45° ein.

## Patentansprüche

1. Kapsel (1) bestehend aus einem vorzugsweise rotationssymmetrisch ausgebildeten Kapselkörper (2) mit einer Seitenwand (3) und mit einem einstückig mit dieser ausgebildetem Boden (4), sowie mit einem den Kapselkörper (2) abdeckenden Deckel (5) zur Bildung einer geschlossenen Kammer (6), welche eine Substanz (7) für die Zubereitung eines Getränks enthält, wobei wenigstens der Boden (4) für die Durchleitung einer Flüssigkeit durch die Kammer mit einer ausserhalb der Kapsel (1) angeordneten Einrichtung (18) an einem Penetrationsbereich (9) des Bodens (4) penetrierbar ist, wobei der Boden (4) einen Versteifungsbereich (10) aufweist, und wobei ein zentraler Bereich des Bodens (4) als Penetrationsbereich (9) ausgebildet ist, wobei der Versteifungsbereich (10) rotationssymmetrisch um den Penetrationsbereich (9) angeordnet ist, **dadurch gekennzeichnet, dass**, wobei die Kapselwand (3) zumindest zwei aussenseitig im Wesentlichen parallel zur Längsachse (22) angeordnete Versteifungsrippen (25) aufweist, die umfangmässig voneinander beabstandet sind, wobei der Kapselkörper (2) umfassend die Kapselwand (3) und die Versteifungsrippen (25) einstückig ausgebildet ist der Versteitungsbereich als zumindest zwei abschnittsweise Vertiefungen (8) im Wesentlichen in Umfangsrichtung im Boden (4) ausgebildet ist, und dass der Kapselkörper (2) zumindest aus zwei Polymerschichten besteht und mittels eines Tiefziehverfahrens hergestellt ist.

2. Kapsel (1) nach Anspruch 1, **dadurch gekennzeichnet, dass** die Vertiefung (8) wenigstens zwei zueinander geneigte Wandabschnitte aufweist.

3. Kapsel (1) nach Anspruch 2, **dadurch gekennzeichnet, dass** die Vertiefung (8) drei zueinander geneigte Wandabschnitte aufweist, wobei ein erster Wandabschnitt (26) in einer entlang der Längsachse (22) des Kapselkörpers (2) verlaufenden Schnittebene im Wesentlichen parallel zur Längsachse des Kapselkörpers (2) liegt oder mit der Längsachse einen Winkel (b) im Bereich von ± 20°, bevorzugt von ± 10° und ganz besonders bevorzugt von ± 5° einschliesst, wobei ein zweiter Wandabschnitt (28) mit dem ersten Wandabschnitt (26) einen ersten Aussenwinkel (t1) im Bereich von 35° bis 55° einschliesst, und wobei ein dritter Wandabschnitt (29) mit dem zweiten Wandabschnitt (28) einen zweiten Aussenwinkel (t2) im Bereich von 35° bis 55° einschliesst.

4. Kapsel (1) nach Anspruch 1 oder 2, **dadurch gekennzeichnet, dass** die Vertiefung (8) stufenförmig ausgebildet ist und / oder in einer entlang der Längsachse (22) des Kapselkörpers (2) verlaufenden Schnittebene L-förmig ausgebildet ist, wobei insbesondere ein Arm (23) der L-Form im Wesentlichen parallel zur Längsachse (22) des Kapselkörpers (2) liegt oder mit der Längsachse einen Winkel (b) im Bereich von ± 20°, bevorzugt von ± 10° und ganz besonders bevorzugt von ± 5° einschliesst, wobei insbesondere ein zweiter Arm (27) der L-Form im Wesentlichen senkrecht zur Längsachse (22) liegt oder mit der Längsachse (22) einen Armwinkel im Bereich von 70° bis 110°, bevorzugt von 80° bis 100° und ganz besonders bevorzugt von 85° bis 95° einschliesst.

5. Kapsel (1) nach einem der Ansprüche 1 bis 4, **dadurch gekennzeichnet, dass** die Vertiefung (8) zumindest einen Flächenabschnitt parallel zu einer entlang der Längsachse (22) des Kapselkörpers (2) verlaufenden Schnittebene durch die Vertiefung (8) aufweist oder dass der Flächenabschnitt mit dieser Schnittebene einen Winkel (a) im Bereich von +/-45°, bevorzugt von +/- 30° und ganz besonders bevorzugt von +/- 15° einschliesst.

6. Kapsel (1) nach einem der Ansprüche 1 bis 5, **dadurch gekennzeichnet, dass** der Boden (4) zumindest zwei und bevorzugt drei bis zehn Vertiefungen (8) aufweist.

7. Kapsel (1) nach Anspruch 6, **dadurch gekennzeichnet, dass** der Boden (4) zwischen den Vertiefungen (8) als insbesondere dreieckförmiger Steg (21) ausgebildet ist.

8. Kapsel (1) nach einem der Ansprüche 1 bis 7, **dadurch gekennzeichnet, dass** eine äussere Schicht des Kapselkörper (2) aus Polyethylen besteht.

9. Kapsel (1) nach einem der Ansprüche 1 bis 8, **dadurch gekennzeichnet, dass** der Deckel (5) aus einer Membran, insbesondere einer Aluminiumfolie, einer perforierten Folie oder Filterpapier oder beliebigen Kombinationen daraus gebildet ist.

10. Kapsel (1) nach einem der Ansprüche 1 bis 9, **dadurch gekennzeichnet, dass** der Penetrationsbereich (9) eine insbesondere kreisförmige Zentrums-Einbuchtung (19) aufweist, insbesondere zur Bildung einer geschlossenen Versteifungslinie (24).

11. Kapsel (1) nach einem der Ansprüche 1 bis 10, **dadurch gekennzeichnet, dass** der Kapselkörper (2) kegelstumpfförmig ausgebildet ist, wobei ein Kegelstumpfwinkel (w) zwischen der Längsachse (22) und der Kapselwand (3) entlang der Längsachse (22) abschnittsweise unterschiedlich ist.

12. Kapsel (1) nach Anspruch 11, **dadurch gekennzeichnet, dass** der Kapselkörper (2) zumindest drei Abschnitte mit unterschiedlichem Kegelstumpfwinkel (w) aufweist.

13. Kapselkörper (2) für eine Kapsel (1) gemäss einem der Ansprüche 1 bis 12.

14. Portionsverpackung (14) umfassend eine mit einer Substanz (7), insbesondere mit Kaffee, gefüllte Kapsel (1) gemäss einem der Ansprüche 1 bis 12, **dadurch gekennzeichnet, dass** die Kapsel (1) von einer Hülle (20) im Wesentlichen luftdicht umschlossen ist.

15. System (15) umfassend eine mit einer Substanz (7) gefüllte Kapsel (1) gemäss einem der Ansprüche 1 bis 12 und eine Getränkeherstellungsvorrichtung (16), wobei die Getränkeherstellungsvorrichtung (16) einen Kapselhalter (17) aufweist zur Aufnahme der Kapsel (1), sowie eine Einrichtung (18) zur Penetrierung eines Bodens (4) der Kapsel (1) und zur Zuführung einer Flüssigkeit in die Kapsel (1) zur Extrahierung der Substanz (7) zur Herstellung eines Getränks, wobei das Getränk durch einen Deckel (5) der Kapsel (1) abführbar ist.

16. Verwendung einer mit Kaffee gefüllten Kapsel (1) gemäss einem der Ansprüche 1 bis 12 zur Herstellung eines Kaffeegetränks.

## Claims

1. Capsule (1) consisting of a preferably rotationally symmetrical capsule body (2) having a side wall (3) and having a base (4) which is realized integrally with said side wall as well as having a lid (5) which covers the capsule body (2) for forming a closed chamber (6) which contains a substance (7) for the preparation of a beverage, wherein, for conducting a liquid through the chamber, at least the base (4) is penetratable at a penetration region (9) of the base (4) by way of a device (18) which is arranged outside of the capsule (1), wherein the base (4) has a reinforcement region (10), and wherein a central region of the base (4) is realized as a penetration region (9), wherein the reinforcement region (10) is arranged in a rotationally symmetrical manner around the penetration region (9), wherein the capsule wall (3) has at least two reinforcement ribs (25) which are arranged on the outside substantially parallel to the longitudinal axis (22) and are spaced apart from one another along the circumference, wherein the capsule body (2) including the capsule wall (3) and the reinforcement ribs (25) is realized integrally, **characterized in that** the reinforcement region is realized in the base (4) as at least two portion-wise recesses (8) substantially in the circumferential direction, and **in that** the capsule body (2) consists of at least two polymer layers and is produced using a deep-drawing method.

2. Capsule (1) according to Claim 1, **characterized in that** the recess (8) has at least two wall portions which are inclined toward one another.

3. Capsule (1) according to Claim 2, **characterized in that** the recess (8) has three wall portions which are inclined toward one another, wherein a first wall portion (26) lies in a cutting plane, which extends along the longitudinal axis (22) of the capsule body (2), substantially parallel to the longitudinal axis of the capsule body (2) or encloses an angle (b) with the longitudinal axis within the range of ± 20°, in a preferred manner of ± 10° and quite especially preferred of ± 5°, wherein a second wall portion (28) encloses a first external angle (t1) with the first wall portion (26) within the range of between 35° and 55°, and wherein a third wall portion (29) encloses a second external angle (t2) with the second wall portion (28) within the range of between 35° and 55°.

4. Capsule (1) according to Claim 1 or 2, **characterized in that** the recess (8) is realized in a step-shaped manner and/or is realized in an L-shaped manner in a cutting plane which extends along the longitudinal axis (22) of the capsule body (2), wherein in particular one arm (23) of the L-shape lies substantially parallel to the longitudinal axis (22) of the capsule body (2) or encloses an angle (b) with the longitudinal axis within the range of ± 20°, in a preferred manner of ± 10° and quite especially preferred of ± 5°, wherein in particular a second arm (27) of the L-shape lies substantially at right angles to the longitudinal axis (22) or encloses an arm angle with the longitudinal axis (22) within the range of between 70° and 110°, in a preferred manner between 80° and 100° and quite especially preferred between 85° and 95°.

5. Capsule (1) according to one of Claims 1 to 4, **characterized in that** the recess (8) has at least one face portion parallel to a cutting plane, which extends along the longitudinal axis (22) of the capsule body (2), through the recess (8) or **in that** the face portion with said cutting plane encloses an angle (a) within the range of ± 45°, in a preferred manner of ± 30° and quite especially preferred of ± 15°.

6. Capsule (1) according to one of Claims 1 to 5, **characterized in that** the base (4) has at least two and in a preferred manner between three and ten recesses (8).

7. Capsule (1) according to Claim 6, **characterized in that** the base (4) between the recesses (8) is realized in particular as a triangular web (21).

8. Capsule (1) according to one of Claims 1 to 7, **characterized in that** an outer layer of the capsule body (2) consists of polyethylene.

9. Capsule (1) according to one of Claims 1 to 8, **characterized in that** the lid (5) is formed from a membrane, in particular an aluminum foil, a perforated foil or filter paper or arbitrary combinations thereof.

10. Capsule (1) according to one of Claims 1 to 9, **characterized in that** the penetration region (9) has an, in particular, circular center indentation (19), in particular for forming a closed reinforcement line (24).

11. Capsule (1) according to one of Claims 1 to 10, **characterized in that** the capsule body (2) is realized as a truncated cone, wherein a truncated cone angle (w) between the longitudinal axis (22) and the capsule wall (3) is different in portions along the longitudinal axis (22).

12. Capsule (1) according to Claim 11, **characterized in that** the capsule body (2) has at least three portions with a different truncated cone angle (w).

13. Capsule body (2) for a capsule (1) according to one of Claims 1 to 12.

14. Portion packaging (14) including a capsule (1) which is filled with a substance (7), in particular with coffee, according to one of Claims 1 to 12, **characterized in that** the capsule (1) is enclosed in a substantially air-tight manner by a covering (20).

15. System (15) including a capsule (1) which is filled with a substance (7) according to one of Claims 1 to 12 and a beverage production apparatus (16), wherein the beverage production apparatus (16) has a capsule holder (17) for accommodating a capsule (1), as well as a device (18) for penetrating a base (4) of the capsule (1) and for supplying a liquid into the capsule (1) for extracting the substance (7) for producing a beverage, wherein the beverage can be discharged through a lid (5) of the capsule (1).

16. Use of a capsule (1) which is filled with coffee according to one of Claims 1 to 12 for producing a coffee beverage.

## Revendications

1. Capsule (1) se composant d'un corps de capsule (2) présentant de préférence la symétrie de révolution, avec une paroi latérale (3) et avec un fond (4) formé d'une seule pièce avec celle-ci, ainsi qu'avec un couvercle (5) recouvrant le corps de capsule (2) pour la formation d'une chambre fermée (6), qui contient une substance (7) destinée à la préparation d'une boisson, dans laquelle au moins le fond (4) peut être percé en une zone de perçage (9) du fond (4) avec un dispositif (18) disposé à l'extérieur de la capsule (1) pour le passage d'un liquide à travers la chambre, dans laquelle le fond (4) présente une zone de renforcement (10), et dans laquelle une zone centrale du fond (4) est réalisée comme zone de perçage (9), dans laquelle la zone de renforcement (10) est disposée, avec la symétrie de révolution, autour de la zone de perçage (9), dans laquelle la paroi de capsule (3) présente au moins deux nervures de renforcement (25) disposées du côté extérieur essentiellement parallèlement à l'axe longitudinal (22), lesquelles nervures de renforcement sont espacées les unes des autres sur la périphérie, dans laquelle le corps de capsule (2) comportant la paroi de capsule (3) et les nervures de renforcement (25) est réalisé d'une seule pièce, **caractérisée en ce que** la zone de renforcement est réalisée sous la forme d'au moins deux creux partiels (8) essentiellement en direction périphérique dans le fond (4), et **en ce que** le corps de capsule (2) se compose au moins de deux couches de polymère et est fabriqué par un procédé d'emboutissage profond.

2. Capsule (1) selon la revendication 1, **caractérisée en ce que** le creux (8) présente au moins deux parties de paroi inclinées l'une vers l'autre.

3. Capsule (1) selon la revendication 2, **caractérisée en ce que** le creux (8) présente trois parties de paroi inclinées les unes vers les autres, dans laquelle une première partie de paroi (26) se situe dans un plan de coupe s'étendant le long de l'axe longitudinal (22) du corps de capsule (2), essentiellement parallèlement à l'axe longitudinal du corps de capsule (2), ou forme avec l'axe longitudinal un angle (b) dans la plage de ± 20°, de préférence de ± 10° et de préférence encore de ± 5°, dans laquelle une deuxième partie de paroi (28) forme avec la première partie de paroi (26) un premier angle extérieur (t1) dans la plage de 35° à 55°, et dans laquelle une troisième partie de paroi (29) forme avec la deuxième partie de paroi (28) un deuxième angle extérieur (t2) dans la plage de 35° à 55°.

4. Capsule (1) selon la revendication 1 ou 2, **caractérisée en ce que**, le creux (8) est réalisé par degrés et/ou est réalisé en forme de L dans un plan de coupe s'étendant le long de l'axe longitudinal (22) du corps de capsule (2), dans laquelle en particulier un bras (23) de la forme en L est essentiellement parallèle à l'axe longitudinal (22) du corps de capsule (2) ou forme avec l'axe longitudinal un angle (b) dans la plage de ± 20°, de préférence de ± 10°, et de préférence encore de ± 5° dans laquelle en particulier un deuxième bras (27) de la forme en L se situe essentiellement perpendiculairement à l'axe longitudinal (22) ou forme avec l'axe longitudinal (22) un angle de bras dans la plage de 70° à 110°, de préférence de 80° à 100° et de préférence encore de 85° à 95°.

5. Capsule (1) selon l'une quelconque des revendications 1 à 4, **caractérisée en ce que** le creux (8) présente au moins une partie de surface parallèle à un plan de coupe à travers le creux (8) s'étendant le long de l'axe longitudinal (22) du corps de capsule (2) ou **en ce que** la partie de surface forme avec ce plan de coupe un angle (a) dans la plage de ± 45°, de préférence de ± 30°, et de préférence encore de ± 15°.

6. Capsule (1) selon l'une quelconque des revendications 1 à 5, **caractérisée en ce que** le fond (4) présente au moins deux et de préférence trois à dix creux (8).

7. Capsule (1) selon la revendication 6, **caractérisée en ce que** le fond (4) est réalisé sous la forme d'une facette en particulier triangulaire (21) entre les creux (8).

8. Capsule (1) selon l'une quelconque des revendications 1 à 7, **caractérisée en ce qu'**une couche extérieure du corps de capsule (2) se compose de polyéthylène.

9. Capsule (1) selon l'une quelconque des revendications 1 à 8, **caractérisée en ce que** le couvercle (5) est formé par une membrane, en particulier une pellicule d'aluminium, une pellicule perforée ou un papier filtre ou par une combinaison quelconque de ceux-ci.

10. Capsule (1) selon l'une quelconque des revendications 1 à 9, **caractérisée en ce que** la zone de perçage (9) présente un renfoncement central (19) en particulier circulaire, en particulier pour la formation d'une ligne de renforcement fermée (24).

11. Capsule (1) selon l'une quelconque des revendications 1 à 10, **caractérisée en ce que** le corps de capsule (2) est réalisé en forme de tronc de cône, un angle de tronc de cône (w) entre l'axe longitudinal (22) et la paroi de capsule (3) étant différent dans certaines parties le long de l'axe longitudinal (22).

12. Capsule (1) selon la revendication 11, **caractérisée en ce que** le corps de capsule (2) présente au moins trois parties présentant un angle de tronc de cône (w) différent.

13. Corps de capsule (2) pour une capsule (1) selon l'une quelconque des revendications 1 à 12.

14. Emballage de dose (14) comprenant une capsule (1) selon l'une quelconque des revendications 1 à 12 remplie avec une substance (7), en particulier avec du café, **caractérisé en ce que** la capsule (1) est entourée par une enveloppe (20) essentiellement étanche à l'air.

15. Système (15) comprenant une capsule (1) selon l'une quelconque des revendications 1 à 12, remplie avec une substance (7), et dispositif de préparation de boisson (16), dans lequel le dispositif de préparation de boisson (16) présente un porte-capsule (17) destiné à recevoir la capsule (1), ainsi qu'un dispositif (18) destiné à percer un fond (4) de la capsule (1) et à introduire un liquide dans la capsule (1) en vue de l'extraction de la substance (7) pour la préparation d'une boisson, dans lequel la boisson peut s'écouler à travers un couvercle (5) de la capsule (1).

16. Utilisation d'une capsule (1) selon l'une quelconque des revendications 1 à 12 remplie de café pour la préparation d'une boisson au café.
